Europäisches Patentamt

European Patent Office

Office européen des brevets

(19)

(11) **EP 0 731 400 B1**

(12) **EUROPÄISCHE PATENTSCHRIFT**

(45) Veröffentlichungstag und Bekanntmachung des Hinweises auf die Patenterteilung:
**12.12.2001 Patentblatt 2001/50**

(51) Int Cl.$^7$: **G05D 1/02**, G01S 5/00

(21) Anmeldenummer: **96250053.4**

(22) Anmeldetag: **04.03.1996**

(54) **Verfahren und Vorrichtung zur Reduzierung einer aus einem Fahrzeug zu übertragenden Datenmenge**

Method and device for reducing the amount of data transmitted from a vehicle

Méthode et dispositif pour réduire la quantité de données transmise par un véhicule

(84) Benannte Vertragsstaaten:
**AT BE CH DE DK ES FI FR GB GR IE IT LI NL PT SE**

(30) Priorität: **09.03.1995 DE 19508486**

(43) Veröffentlichungstag der Anmeldung:
**11.09.1996 Patentblatt 1996/37**

(73) Patentinhaber: **MANNESMANN Aktiengesellschaft
40213 Düsseldorf (DE)**

(72) Erfinder: **Widl, Andreas
81667 München (DE)**

(74) Vertreter: **Meissner, Peter E., Dipl.-Ing. et al
Meissner & Meissner,
Patentanwaltsbüro,
Hohenzollerndamm 89
14199 Berlin (DE)**

(56) Entgegenhaltungen:
**EP-A- 0 349 182       EP-A- 0 545 636
DE-A- 4 209 457       DE-A- 4 220 963
GB-A- 2 277 844       US-A- 4 638 438
US-A- 4 939 652       US-A- 5 016 007**

## Beschreibung

Die vorliegende Erfindung bezieht sich auf ein Verfahren und auf eine Vorrichtung zur Reduzierung und Übertragung einer Datenmenge von Fahrzeugdaten und Positionsdaten.

Es ist möglich, zur Ermittlung von Verkehrslage- oder Straßenzustandsdaten eine Stichprobenfahrzeugflotte zu verwenden, bei der einzelne als "Floating Cars" bezeichnete Stichprobenfahrzeuge zum Beispiel über Funk vorbestimmte Fahrzeugdaten und dazugehörige Positionsdaten an eine Empfangsstelle eines Zentralrechners Übermitteln. Mit Hilfe dieser Daten kann dann der Zentralrechner anhand vorbestimmter Algorithmen die Verkehrslage ermitteln oder zum Beispiel Rückschlüsse auf Umgebungsbedingungen wie Nässe oder Vereisung der Straße, Nebel, etc. gewinnen.

Dazu ist es zum Beispiel möglich, kontinuierlich oder in vorbestimmten Zeitabständen Datensätze, die die Positionsdaten des Fahrzeuge, und die entsprechenden Fahrzeugdaten aufweisen, an die Empfangs teile des Zentralrechners zu Übermitteln. Ein solches System hat verschiedene Nachteile. Erstens hat ein Funknetz wie zum Beispiel ein GSM-Netz keine unbegrenzte Kapazität, so daß es zu einer Überlastung des Netzes kommen kann. Zweitens muß der Zentralrechner anhand der vorbestimmten Algorithmen aus den empfangenen Datensätzen die gewünschten Informationen oder Vorhersagen errechnen. Dabei wird die Rechenlast des Zentralrechners um so größer, je größer die zu verarbeitende Datenmenge ist. Die von einem Floating Car nach einem festen Schema übermittelten Datensätze enthalten aber zumindestens teilweise momentan überflüssige Daten, die die Rechenlast unnötig erhöhen.

Aus der DE 4220963 ist ein Navigationssystem für Kraftfahrzeuge bekannt, dass zu einem automatischen Notfall - und Unfallrufsystem ausgebaut ist. Hierbei ist die Datenübermittlung beschränkt auf ein Unfallereignis, d.h. das System selbst wird nicht zu einer ständigen Datenübermittlung herangezogen. Von Interesse sind bei einem derartigen System lediglich Daten, die kurze Zeit vor dem Unfallgeschehen liegen. Diese Schrift beschreibt andererseits auch die Möglichkeit zusätzlich Daten über Fahr- oder Reisebedingungen vor dem Unfall zu speichern, um die spätere Analyse des Unfalls zu erleichtern. Für die Speicherung dieser Daten ist ein FIFO-Speicher vorgesehen. Zusätzlich kann noch ein weiterer Speicher für beispielsweise die Fahrzeugnummer, Fahrzeuginspektionen und dergleichen vorgesehen sein.

Es ist Aufgabe der vorliegenden Erfindung, ein Verfahren und eine Vorrichtung zur Reduzierung einer aus einem Fahrzeug zu übertragenden Datenmenge anzugeben.

Diese Aufgabe wird gelöst durch ein Verfahren nach Anspruch 1 und eine Vorrichtung nach Anspruch 7. Weiterbildungen der Erfindung sind in den Unteransprüchen angegeben.

Weitere Merkmale und Zweckmäßigkeiten der Erfindung ergeben sich aus der Beschreibung von Ausführungsbeispielen anhand der Figuren. Von den Figuren zeigen:

Fig. 1 den Verlauf mehrerer Straßen und einer Autobahn, wobei auf der Autobahn den Verlauf der Autobahn beschreibende Autobahnpunkte dargestellt sind;

Fig. 2 und 3 eine Darstellung der Reduzierung der Anzahl der zur Beschreibung des Verlaufs einer Autobahn mit einer ausreichenden Genauigkeit notwendigen Punkte;

Fig. 4 eine Blockdarstellung einer ersten Ausführungsform einer Vorrichtung zur Reduzierung einer aus einem Fahrzeug zu übertragenden Datenmenge; und

Fig. 5 eine zweite Ausführungsform einer Vorrichtung zur Reduzierung einer aus einem Fahrzeug zu übertragenden Datenmenge.

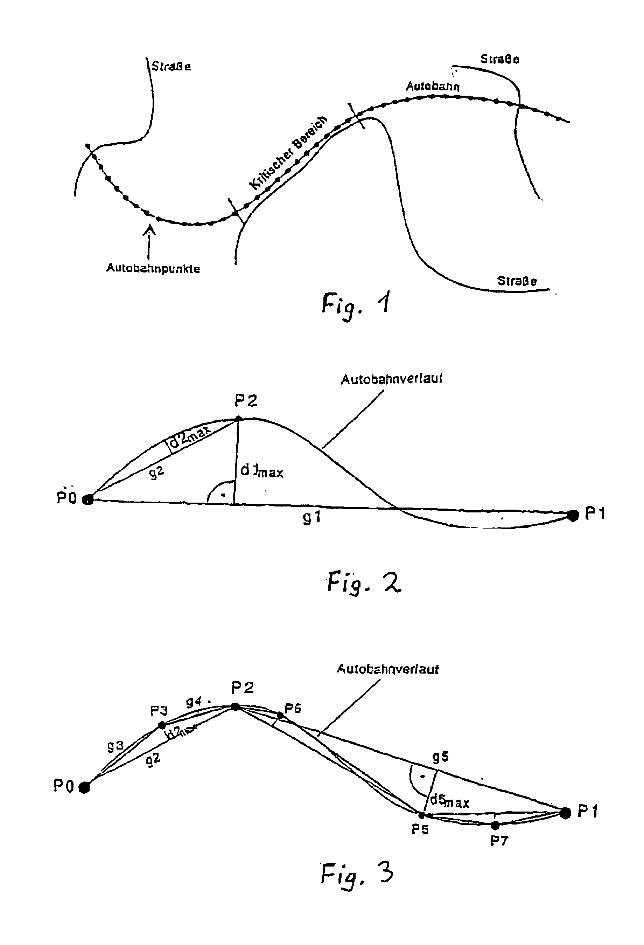

Figur 1 zeigt den Verlauf einer Autobahnteilstrecke und mehrerer Straßenteilstrecken. Entlang des Verlaufs der Autobahnteilstrecke ist eine Mehrzahl benachbarter Autobahnpunkte dargestellt. Eine Verbindung dieser Autobahnpunkte derart, daß in einer Verlaufsrichtung der Autobahnteilstrecke benachbarte Autobahnpunkte durch Vektoren, deren Anfangs- und Endpunkt jeweils benachbarte Autobahnpunkte sind, verbunden werden, ergibt einen ersten Vektorzug, der den Verlauf der Autobahnteilstrecke mit einer vom Abstand der Autobahnpunkte abhängenden Genauigkeit beschreibt.

Ein Fahrzeug einer Stichprobenflotte weist in dem Fahrzeug installierte Sensoren, die kontinuierlich veränderliche Zustandsgrößen wie zum Beispiel die Geschwindigkeit, die Motordrehzahl, die Außentemperatur, die Luftfeuchtigkeit, etc. erfassen, auf. Das Fahrzeug weist weiter Sensoren, die diskrete Zustandsgrößen wie zum Beispiel die Stellung verschiedener Schalter (Scheibenwischer, Licht, Nebellicht, Heckscheibenheizung, etc.) erfassen. Das Fahrzeug weist weiterhin Vorrichtungen auf, die den Betrieb von aktiven Vorrichtungen (Aktoren) wie zum Beispiel des Airbags, des Unfalldatenschreibers (UDS), des Antiblockiersystems (ABS), der Antriebsschlupfregelung (ASR), etc. in dem Fahrzeug, anzeigen. Das Fahrzeug weist weiter einen GPS-Empfänger (GPS = Global Positioning System) als Positionsbestimmungsvorrichtung auf. Der GPS-Empfänger erzeugt fortlaufend in vorbestimmten Zeitabständen Positionsdaten, die die momentane Position (Länge, Breite, Zeit) des Fahrzeugs in einem vorbestimmten Koordinatensystem (Längengrade, Breitengrade) enthält. Die von den Sensoren und den Vorrichtungen zum Anzeigen des Betriebs der Aktoren erzeugten Daten bilden die Fahrzeugdaten, aus denen ein Zentralrechner in Verbindung mit den entsprechen Positionsdaten (einschließlich der zugeordneten Zeitdaten) Informationen oder Vorhersagen über die Verkehrslage oder den Straßenzustand errechnen kann.

Die Gesamtheit aller Fahrzeugdaten und Positionsdaten nur für das in Fig. 1 dargestellte Autobahnteilstück würde bereits eine enorme zum Beispiel durch ein GSM-Netz zu übertragende und von dem Zentralrechner zu verarbeitende Datenmenge bedeuten.

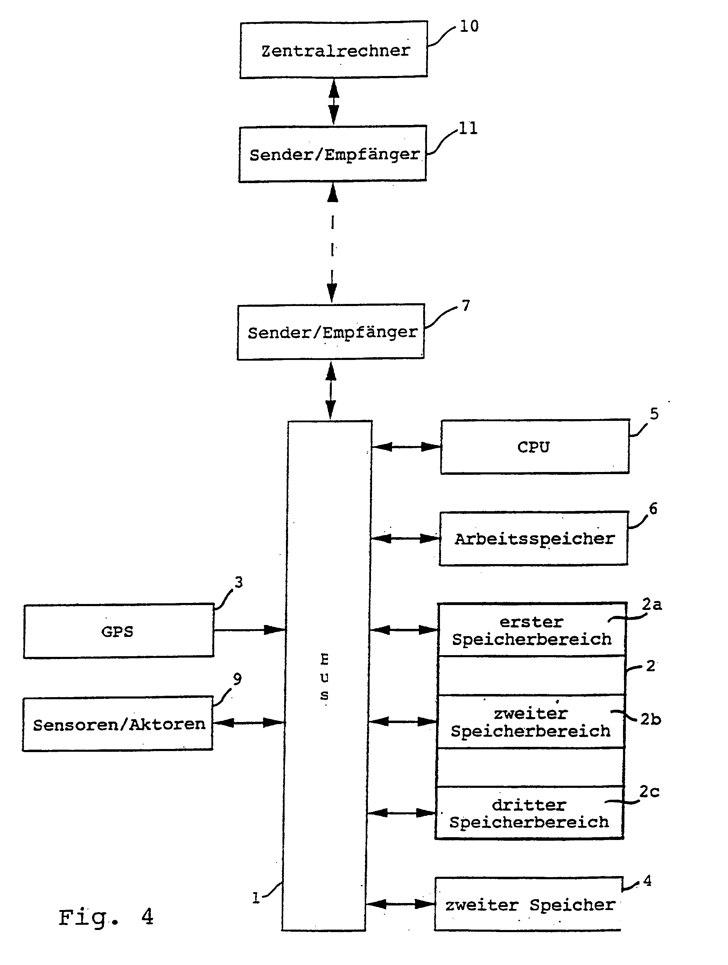

Fig. 4 zeigt eine erste Ausführungsform einer Vorrichtung zur Reduzierung der von dem Fahrzeug zu übertragenden Datenmenge von Fahrzeugdaten und Positionsdaten. Wie in Fig. 4 gezeigt ist, weist die Vorrichtung einen GPS-Empfänger 3 und Sensoren/Aktoren 9 zur Erzeugung der Positions- bzw. Fahrzeugdaten auf. Der GPS-Empfänger und die Sensoren/Aktoren sind mit einem Datenbus 1 verbunden. Mit dem Datenbus 1 sind weiterhin eine zentrale Prozessoreinheit (CPU) 5, ein Arbeitsspeicher 6, ein erster Speicher 2, der erste bis dritte Speicherbereiche 2a bis 2c aufweist, ein zweiter Speicher 4 und eine Sende-/Empfangseinheit (zum Beispiel ein GSM-Sender/Empfänger) 7 verbunden. Die Sende-/Empfangseinheit 7 kann über den Datenbus 1 an sie übergebene Daten an eine Sende-/Empfangseinheit 11 des Zentralrechners 10 übermitteln oder von der Sende-/Empfangseinheit 11 Daten empfangen.

Die von den Sensoren/Aktoren 9 erzeugten Daten werden, wenn sie diskrete Zustandsgrößen wie zum Beispiel eine Schalterstellung oder den Betrieb bzw. Nicht-Betrieb eines Aktors (z.B. ABS) betreffen, in den ersten Speicherbereich 2a des ersten Speichers 2 geschrieben. Dabei geben die entsprechenden Sensoren bzw. Vorrichtungen zur Anzeige des Betriebs der Aktoren diese diskreten Zustandsgrößen nur dann aus, wenn eine Änderung des Zustands auftritt (zum Beispiel Änderung der Schalterstellung). Die kontinuierlich veränderlichen Zustandsgrößen wie zum Beispiel die Geschwindigkeit werden in den zweiten Speicherbereich 2b des ersten Speichers 2 geschrieben. Vorbestimmte Informationen, denen eine höhere Priorität als den anderen Fahrzeugdaten zugewiesen ist, wie zum Beispiel das Auslösen des Airbags oder die Aktivierung des UDS, werden in den dritten Speicherbereich 2c zusammen mit dem momentanen Positionsdatensatz (Länge, Breite, Zeit) geschrieben.

Die Positionsdaten, die von dem GPS-Empfänger 3 erzeugt werden, werden in den zweiten Speicher 4 geschrieben.

Nach einem vorbestimmten Intervall, das eine vorbestimmte Zeitspanne und/oder eine vorbestimmte Wegstrecke, die durch das Fahrzeug zurückgelegt wurde, bestimmt, ermittelt die CPU 5 aus den während dieses Intervalls in den zweiten Speicher 4 geschriebenen Positionsdaten einen ersten Vektorzug, der aus den Vektoren besteht, die die den Positionsdaten entsprechenden Punkte (Länge, Breite) in der zeitlichen Abfolge ihrer Speicherung verbinden. Dieser erste Vektorzug beschreibt den Verlauf des von dem Fahr-zeug in dem Intervall befahrenen Weges mit der größten aus den Positionsdaten ermittelbaren Genauigkeit.

Zur Reduzierung der zur Beschreibung der befahrenen Wegstrecke notwendigen Positionsdaten ermittelt die CPU 5 nun nach einem in den Fig. 2 und 3 dargestellten Verfahren einen reduzierten Positionsdatensatz. Dabei wird zuerst der Anfangspunkt P0 des ersten Vektorzugs als erste Position und der Endpunkt P1 des ersten Vektorzug als zweite Position gesetzt und die Gerade g1 zwischen diesen beiden Punkten P0, P1 bestimmt. Dann wird der maximale senkrechte Abstand der Geraden g1 von dem ersten Vektorzug bestimmt, wobei zur Bestimmung zweckmäßigerweise die Anfangspunkte der Vektoren des ersten Vektorzugs verwendet werden, so daß auch bei einem parallel zu der Geraden g1 verlaufenden Vektor des ersten Vektorzuges, der den maximalen senkrechten Abstand zu der Geraden g1 aufweist, höchstens 2 maximale senkrechte Abstände ermittelt werden. Dann wird der näher an der ersten Position gelegene maximale senkrechte Abstand ausgewählt, während in allen anderen Fällen nur ein maximaler senkrechter Abstand ermittelt wird. Der maximale senkrechte Abstand jedweder Geraden zu dem ersten Vektorzug wird im folgenden einfach als Abstand bezeichnet.

Wie in Fig. 2 gezeigt ist, wird für die Gerade g1 der maximale Abstand d1max, der in dem Punkt P2 des ersten Vektorzugs endet, ermittelt. Wenn der Abstand d1max kleiner als ein vorbestimmter Schwellenwert ist, wird der Autobahnverlauf zwischen den Punkten P1 und P2 durch die Gerade g1 im Rahmen der gewünschten Genauigkeit (vorbestimmter Schwellenwert) genau genug beschrieben, und die Punkte P0 und P1 werden als reduzierter Positionsdatensatz gespeichert. Wenn der Abstand d1max nicht kleiner als der vorbestimmte Schwellenwert ist, wird der Punkt P2 als zweite Position gesetzt und die Gerade g2 zwischen der unveränderten ersten Posi tion P0 und der neuen zweiten Position P2 bestimmt. Für die Gera de g2 wird wiederum der Abstand d2max bestimmt (Fig. 2).

Dieses Verfahren wird fortgesetzt, bis, wie in Fig. 3 dargestell ist, eine Gerade g3 zwischen einer unveränderten ersten Position P0 und einer zweiten Position P3, die durch den Abstand der zuletzt bestimmten Gerade g2 festgelegt ist, einen Abstand von dem ersten Vektorzug aufweist, der kleiner als der vorbestimmte Schwellenwert ist. Die aktuelle zweite Position P3 wird dann als . Wert für den reduzierten Positionsdatensatz gespeichert. Dann wird die zweite Position P3 als neue erste Position und die letzte nicht gespeicherte zweite Position P2 als neue zweite Position festgelegt und die Gerade g4 zwischen diesen beiden Positionen bestimmt. Bei dem in Fig. 3 dargestellten Fall weist die so bestimmte Gerade g4 einen Abstand auf, der kleiner als der vorbestimmte Schwellenwert ist. Daher wird die zweite Position P2 zur neuen ersten Position und die letzte nicht gespeicherte zweite Position P1 zur neuen zweiten Position zur Bestimmung der Geraden g5. Dieses Verfahren wird fortgesetzt, bis der in den Fig. 2 und 3 dargestellte Autobahnverlauf durch die Punkte P0 bis P7, die einen zweiten Vektorzug bestimmen, mit einer Genauigkeit, die innerhalb der durch den vorbestimmten Schwellenwert bestimmten Toleranz liegt, beschrieben ist.

Derart wird eine je nach Zeitdauer bzw. Streckenlänge des Intervalls und der entsprechenden Krümmung der befahrenen Wegstrecke enorme Reduzierung der Datenmenge der Positionsdaten erreicht.

Die CPU wählt nun zu diesem reduzierten Positionsdatensatz aus den in dem ersten Speicher 2 gespeicherten, im jeweiligen Strekkenabschnitt angefallenen Fahrzeugdaten nach vorbestimmten Kriterien an den Zentralrechner zu übertragende Fahrzeugdaten aus. Bei der vorliegenden Ausführungsform können diese Kriterien vor dem Einsatz des Fahrzeuges ausgewählt werden. Als solche Kriterien stehen zum Beispiel die Übertragung von Durchschnittswerten für kontinuierlich veränderbare Zustandsgrößen (zum Beispiel Durchschnittsgeschwindigkeit im Intervall), die Übertragung von Bereichsangaben für kontinuierlich veränderbare Zustandsgrößen (zum Beispiel Geschwindigkeit <40km/h, <80km/h, etc.), die Übertragung von diskreten Zustandsgrößen nur dann, wenn sich ihr zustand ändert, etc. zur Verfügung.

Für die Übertragung verbindet die CPU die reduzierten Positionsdaten und die entsprechend ausgewählten Fahrzeugdaten zu einem sogenannten "Zustandsvektor". Dieser Zustandsvektor wird von der CPU über den Datenbus und die Sende-/Empfangseinheit 7 an die Sende-/Empfangseinheit 11 des Zentralrechners 10 entweder periodisch und/oder auf Anfrage durch den Zentralrechner übertragen.

Bei dieser Ausführungsform können Fahrzeugdaten, die mit einer höheren Priorität innerhalb der Vorrichtung spezifizierbar sind, unabhängig von den reduzierten Positions- und Fahrzeugdaten übertragen werden, wenn dies voreingestellt ist. Zum Beispiel das Auslösen des Airbags oder des Unfalldatenschreibers oder das Einschalten der Warnblinkanlage auf einer Autobahn können Informationen so hoher Priorität sein, daß der Zentralrechner 10 diese ohne die Verzögerung bis zur Übertragung der Positions- und Fahrzeugdaten des gesamten Intervalls, benötigt. Diese Fahrzeugdaten höherer Priorität können daher, wenn dies in der Vorrichtung voreingestellt wird, z.B. sofort als Alarmcode mit dem aktuellen Positionsdatensatz (Längengrad, Breitengrad, Ortszeit) über die Sende-/Empfangseinheit 7 an den Zentralrechner 10 übertragen werden.

Die Positionsdaten in dem Zustandsvektor können weiterhin dadurch reduziert werden, daß mit Ausnahme eines sogenannten absoluten Koordinatenpaares (Anfangs- oder Endpunkt in dem Intervall), das die Positionsdaten in dem vorbestimmten Koordinatensystem codiert enthält, die übrigen reduzierten Positionsdaten nur als relative Koordinaten zu diesem einen absoluten Koordinatenpaar in den Zustandsvektor aufgenommen werden.

Nachfolgend einige Beispiele für die oben beschriebenen Zustandsvektoren eines "Floating Car":

1. Einfacher Zustandsvektor mit GPS-Information zum Zeitpunkt t

$$\bar{Z} := \bar{Z}_{GPS} = \begin{pmatrix} Position\_Latitude_{absolute} \\ Position\_Longitude_{absolute} \\ Zeitpunkt\_t_{absolute} \end{pmatrix}$$

2. Einfacher Zustandsvektor mit GPS-Information zum Zeitpunkt t und mit Alarmcode für vorbestimmte Informationen höherer Priorität.

$$\bar{Z} := \begin{pmatrix} \bar{Z}_{GPS} \\ Code_{Alarm} \end{pmatrix} ; \text{z.B. } Code_{Alarm} = 0: \text{kein Alarm, 1: Airbag ausgelöst, 2: UDS aktiv}$$

3. Einfacher Zustandsvektor mit GPS-Informationen zum Zeitpunkt t, Alarmcode und Fahrzeugdaten in Form von Statusinformation ($\vec{Z}_{Status}$)

$$\vec{Z} := \begin{pmatrix} \vec{Z}_{GPS} \\ Code_{Alarm} \\ \vec{Z}_{Status} \end{pmatrix} ; \quad \vec{Z}_{Status} := \begin{pmatrix} Code_{Scheibenwischer} \\ Code_{Temperatur} \\ Code_{Licht} \\ Code_{Warnblinklicht} \\ Code_{Nebelrückleuchte} \end{pmatrix} ;$$

z.B.: $Code_{Scheibenwischer}$ = 0: ausgeschaltet, 1: Stufe 1,2: Stufe 2 etc.
z.B.: $Code_{Temperatur}$ = 0:T=-20°C, 1:T=-10°C, 2:T=0°C; 3:T=10°C, 4:T= 20° C
z.B.: $Code_{Licht}$ = 0:ausgeschaltet, 1: Standlicht, 2: Abblendlicht; 3: Fernlicht
z.B.: $Code_{Wamblinidicht}$ = 0: ausgeschaltet, 1: eingeschaltet
z.B.: $Code_{Nebelrückleuchte}$ = 0: ausgeschaltet, 1: eingeschaltet

4. Zustandsvektor aus absoluten und relativen Positionen für eine zurückgelegte Strecke
(Der graphische (zweite) Vektorzug wird nach dem beschriebenen Verfahren generiert)

$$\vec{Z} := \vec{Z}_{Fahrthistorie} = \vec{Z}_{Position\ absolute} + \vec{Z}\ i_{Position\ relative}; i=1,2,...$$

$$\vec{Z}_{Position\ absolute} = \begin{pmatrix} Position\_Latitude_{absolute} \\ Position\_Longitude_{absolute} \\ Zeitpunkt\_t_{absolute} \end{pmatrix}$$

$$\vec{Z}_{i\ Position\ relative} = \begin{pmatrix} Position\_i\_Latitude_{relative} \\ Position\_i\_Longitude_{relative} \\ Zeitpunkt\_i\__{relative} \end{pmatrix}$$

$$\text{z.B.: } \vec{Z} := \begin{pmatrix} 1163467 \\ 4810365 \\ 12400 \end{pmatrix} + \begin{pmatrix} -3 \\ 1 \\ 60 \end{pmatrix} + \begin{pmatrix} -5 \\ 0 \\ 33 \end{pmatrix} + \begin{pmatrix} -1 \\ 0 \\ 23 \end{pmatrix} + \begin{pmatrix} 2 \\ -3 \\ 97 \end{pmatrix} + ...$$

5. Zustandsvektor aus absoluten und relativen Positionen für eine zurückgelegte Strecke mit Fahrzeugdaten in Form von detaillierten Statusinformationen zu den einzelnen Positionen ($\vec{Z}_{\_i\_Status}$)

$$\vec{Z} := \vec{Z}_{Fahrhistorie+Status} = \vec{Z}_{Position\ absolute+Status} + \vec{Z}\ i_{Position\ relative+Status}; i=1,2,...$$

$$\vec{Z}_{\text{Position Absolute+Status}} = \begin{pmatrix} Position\_Latitude_{absolute} \\ Position\_Longitude_{absolute} \\ Zeitpunkt\_t_{absolute} \\ \vec{Z}_{Status} \end{pmatrix}$$

$$\vec{Z}_{\text{i Position Relative+Status}} = \begin{pmatrix} Position\_i\_Latitude_{relative} \\ Position\_i\_Longitude_{relative} \\ Zeitpunkt\_i\_relativ \\ \vec{Z}\_i\_Status \end{pmatrix}$$

6. Zustandsvektor aus absoluten und relativen Positionen für eine zurückgelegte Strecke mit reduzierten Fahrzeugdaten

$$\vec{Z} := \begin{pmatrix} \vec{Z}_{Fahrthistorie} \\ Code_{vMittel} \\ \vec{Z}_{Status} \end{pmatrix}$$

$Code_{vMittel}$ = 0:v < 20 km/h, 1: v < 50 km/h, 2: v < 80 km/h, 3: v < 120 km/h, 4:Rest

$\vec{Z}_{Status}$ sind z.B. Fahrzeugdaten in Form der Statusinformationen an der aktuellen Position.

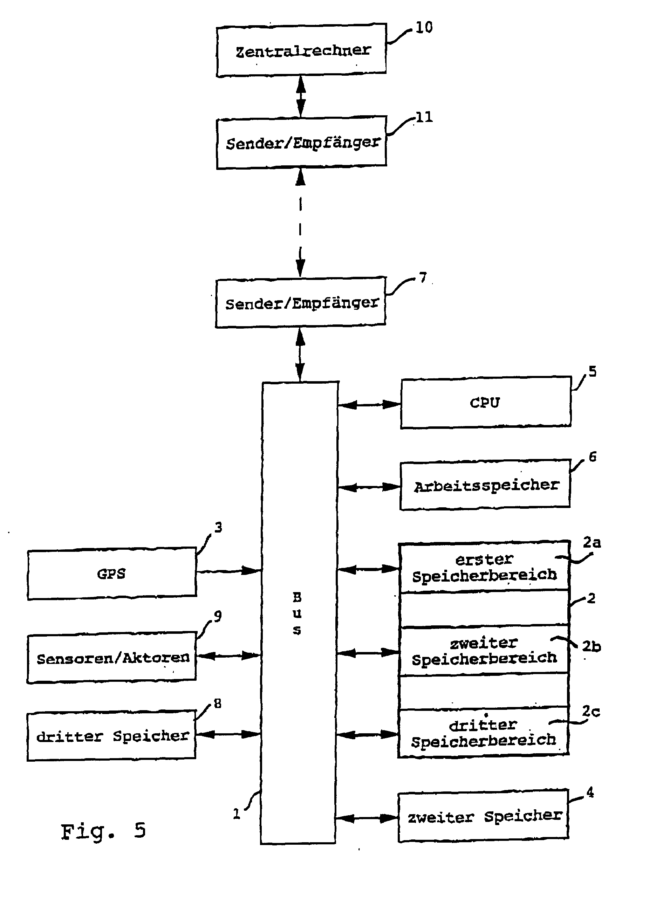

Fig. 5 zeigt eine zweite Ausführungsform einer Vorrichtung zur Reduzierung einer aus einem Fahrzeug zu übertragenden Datenmenge. Die in Fig. 5 dargestellte Ausführungsform unterscheidet sich von der in Fig. 4 dargestellten Ausführungsform dadurch, daß ein dritter Speicher 8, der mit dem Datenbus 1 verbunden ist, vorgesehen ist. Der dritte Speicher 8 dient zur Speicherung einer digitalisierten Straßenkarte, die z.B. in Form eines Nur-Lese-Speichermediums wie einer CD-ROM vorliegt oder über die Sende-/ Empfangseinheit 7 und den Datenbus 1 an den dritten Speicher 8 übertragen wird. Der dritte Speicher enthält die digitalisierte Straßenkarte mit einer vorbestimmten Auflösung sowohl der Genauigkeit des Straßenverlaufs als auch der Umfänglichkeit der Darstellung des Straßennetzes. Zum Beispiel können in dem dritten Speicher nur Autobahnen und Bundesstraßen und/oder die Hauptverkehrsstraßen in einer Stadt verzeichnet sein. Die in Fig. 5 gezeigte zweite Ausführungsform ermöglicht über die bereits zur ersten Ausführungsform beschriebene Reduzierung der zu übertragenden Datenmenge hinaus eine weitere Reduzierung der Positionsdaten. Die in dem zweiten Speicher 4 gespeicherten Positionsdaten werden mit dem in dem dritten Speicher 8 gespeicherten Verlauf der Straßen verglichen. Die CPU, speichert dann den Anfangs- und den Endpunkt jedes Teils des ersten Vektorzugs, der mit einem Abschnitt einer der in dem dritten Speicher 8 gespeicherten Straßen innerhalb einer vorbestimmten Toleranz übereinstimmt. Die in dem dritten Speicher 8 gespeicherten Straßen sind mit einem Code für die gesamte Straße oder für bestimmte Straßenabschnitte gespeichert, der von der CPU zusammen mit dem entsprechenden Anfangs- und Endpunkten der übereinstimmenden Teile des ersten Vektorzugs in dem Arbeitsspeicher 6 gespeichert wird. Derart können die Teile des ersten Vektorzugs, die mit in dem dritten Speicher 8 gespeicherten Straßen innerhalb der vorbestimmten Toleranz übereinstimmen, durch zwei Punkte und einen Code spezifiziert werden. Die Teile des ersten Vektorzugs, die nicht mit einer einzelnen der in dem dritten Speicher 8 gespeicherten Straßen übereinstimmen, sondern mit keiner oder mit mehr als einer der in dem dritten Speicher 8 gespeicherten Straßen übereinstimmen, werden bezüglich der Positionsdaten mit dem zur ersten Ausführungsform beschriebenen Verfahren reduziert.

Die Auswahl der Fahrzeugdaten kann wie bei der ersten Ausführungsform erfolgen.

Alternativ ist es mit der zweiten Ausführungsform auch möglich, wenn der Zentralrechner 10 nur Fahrzeug- und Positionsdaten aus den befahrenen Straßenabschnitten, die mit einer in dem dritten Speicher 8 gespeicherten Straße identifiziert werden können, benötigt, nur solche Daten zu übermitteln. Dann werden die Teile des ersten Vektorzugs, die nicht einer der in dem dritten Speicher 8 gespeicherten Straßen zugeordnet werden können, und die entsprechenden Fahrzeug- und Positionsdaten nicht zur Übertragung ausgewählt.

Nachfolgend zwei weitere Beispiele (7., 8.) für Zustandsvektoren, die ebenso wie die zuvor beschriebenen Zustandsvektoren mit der zweiten Ausführungsform erzeugt werden können:

7. Zustandsvektor bei vorhandener digitaler Straßenkarte im Fahrzeug (das "Floating Car" weiß, auf welcher Straße und auf welchem Streckenabschnitt es sich gerade befindet)

$$\vec{Z} := \begin{pmatrix} Code_{Straßenkennung} \\ Code_{Streckenabschnitt} \\ Code_{Geschwindigkeit} \\ Zeitpunkt\_t_{absolute} \\ \vec{Z}_{Status} \end{pmatrix}$$

$Code_{Geschwindigkeit}$ = 0: v < 20 km/h; 1: v < 50 km/h; 2: v < 80 km/h; 3: v < 120 km/h; 4: Rest
$Z_{Status}$ sind z.B. Fahrzeugdaten in Form der Statusinformation an der letzten GPS-Position
$Code_{Straßenkennung}$ z.B. A8, B27, etc..
$Code_{Streckenabschnitt}$ z.B. (133,134) für Einfahrtnummer 133, Ausfahrtnummer 134

8. Zustandsvektor mit Alarmcode bei vorhandener digitaler Straßenkarte im Fahrzeug

$$\vec{Z} := \begin{pmatrix} Code_{Straßenkennung} \\ Code_{Streckenabschnitt} \\ Code_{Alarm} \\ Zeitpunkt\_t_{absolute} \end{pmatrix}$$

$Code_{Alarm}$=   0: kein Alarm;
1: Airbag ausgelöst;
2: UDS aktiv,
3: Wamblinkanlage aktiv
4: Geschwindigkeit = 0

## Patentansprüche

1. Verfahren zur Reduzierung und Übertragung einer Datenmenge von Fahrzeugdaten und Positionsdaten aus einem Fahrzeug einer Stichprobenfahrzeugflotte an einen zentralen Verkehrslageerfassungsrechner, wobei die Fahrzeugdaten Informationen über den Betriebszustand und/oder die Umgebung des Fahrzeugs enthalten und die Positionsdaten Informationen über die Position des Fahrzeugs in einem vorbestimmten Koordinatensystem zu einem bestimmten Zeitpunkt enthalten, mit den Schritten:

- Speichern der in einem Intervall, das einer vorgegebenen Zeitspanne oder einer vorgegebenen Wegstrecke entspricht, anfallenden Fahrzeugdaten in einem ersten Speicher (2),
- Speichern der in dem Intervall anfallenden Positionsdaten in einem zweiten Speicher (4),
- Reduzieren der gespeicherten Positionsdaten, die einen ersten Vektorzug bestimmen, der den durch das Fahrzeug in dem Intervall zurückgelegten Weg beschreibt, derart, daß die reduzierten Positionsdaten einen zweiten Vektorzug bestimmen und der maximale senkrechte Abstand der Vektoren des zweiten Vektorzugs von dem ersten Vektorzug kleiner als ein vorbestimmter Schwellenwert ist,
- Treffen einer Auswahl aus den gespeicherten Fahrzeugdaten nach vorbestimmten Kriterien, zu den reduzierten Positionsdaten
- Bereitstellen der reduzierten Positionsdaten und der Auswahl der gespeicherten Fahrzeugdaten und

- Übertragung der bereitgestellten Daten periodisch oder auf Anfrage durch den Zentralrechner.

2. Verfahren nach Anspruch 1,
bei dem die Reduzierung der Positionsdaten die folgenden Schritte aufweist:

a) Bestimmen der Verbindungsgeraden einer ersten und einer zweiten Position des Fahrzeugs in dem Intervall und des maximalen senkrechten Abstandes der Verbindungsgeraden zu dem ersten Vektorzug, wobei anfänglich beim Bestimmen der Verbindungsgeraden der Anfangspunkt des ersten Vektorzugs als erste Position und der Endpunkt des ersten Vektorzugs als zweite Position gesetzt werden und der Anfangspunkt des ersten Vektorzugs als Positionswert der reduzierten Positionsdaten gespeichert wird, und
b) wenn der Abstand nicht kleiner als der vorbestimmte Schwellenwert ist, erneutes Ausführen von Schritt a) mit dem Endpunkt des Abstandes auf dem ersten Vektorzug als neuer zweiter Position und der unveränderten ersten Position aus der
vorhergehenden Ausführungen von Schritt a) oder wenn der Abstand kleiner als der vorbestimmte Schwellenwert ist, Speichern der zweiten Position als Positionswert der reduzierten Positionsdaten und ein erneutes Ausführen von Schritt a) mit der gerade gespeicherten zweiten Position als neuer erster Position und mit der letzten noch nicht als Positionswert der reduzierten Positionsdaten gespeicherten zweiten Position aus vorhergehenden Ausführungen des Schrittes a) als neuer zweiter Position, wobei die Reduzierung beendet wird, wenn die neue erste Position der Endpunkt des ersten Vektorzug ist.

3. Verfahren nach Anspruch 1,
bei dem die Reduzierung der Positionsdaten die folgenden Schritte aufweist:

c) Vergleichen der gespeicherten Positionsdaten mit einer in dem Fahrzeug gespeicherten digitalisierten Karte, die den Verlauf von Verkehrswegen in dem vorbestimmten Koordinatensystem und jeweils einen Code für jeweils einen der Verkehrswege enthält, und
d) Speichern von Anfangs- und Endpunkt jedes Teils des ersten Vektorzugs, der mit einem Abschnitt eines der Verkehrswege mit einer vorbestimmten Toleranz übereinstimmt, und des Codes dieses Verkehrsweges.

4. Verfahren nach Anspruch 2 und 3,
bei dem die Reduzierung der Positionsdaten für den oder die Teile des ersten Vektorzugs, die innerhalb der vorbestimmten Toleranz mit einem der Verkehrswege übereinstimmen, entsprechend der Schritte c) und d) und für den oder die Teile des ersten Vektorzugs, die innerhalb der vorbestimmten Toleranz mit keinem oder mit mehr als einem der Verkehrswege übereinstimmen, entsprechend der Schritte a) und b) mit den entsprechenden Anfangs- und Endpunkten der Teile des ersten Vektorzugs ausgeführt wird.

5. Verfahren nach einem der Ansprüche 1 bis 4,
**dadurch gekennzeichnet, daß**
für den zweiten Vektorzug nur der Anfangs- und/oder der Endpunkt als Punkte in dem vorbestimmten Koordinatensystem und die übrigen reduzierten Positionsdaten als relative Koordinaten zu diesem Anfangs- und/oder Endpunkt gespeichert werden.

6. Verfahren nach einem der Ansprüche 1 bis 5,
**dadurch gekennzeichnet, daß**
die übertragenen Fahrzeugdaten aus den gespeicherten Fahrzeugdaten derart ausgewählt werden, daß Fahrzeugdaten, die Informationen über einen diskreten Status enthalten, nur bei einer Änderung des diskreten Status ausgewählt werden, daß Fahrzeugdaten, die Informationen Über einen kontinuierlich veränderlichen Zustand enthalten, in vorbestimmter Weise nur bei einer Schwellwertüber- und/oder -unterschreitung ausgewählt werden und/oder nur als in einem vorbestimmten Bereich liegend ausgewählt werden, und daß Fahrzeugdaten, die Informationen einer vorbestimmten höheren Priorität enthalten, immer ausgewählt werden, und wahlweise sofort bei Erzeugung der Information mit dem momentanen Positionswert übertragen werden können.

7. Vorrichtung zur Reduzierung und Übertragung einer Datenmenge von Fahrzeugdaten und Positionsdaten aus einem Fahrzeug einer Stichprobenfahrzeugflotte an einen zentralen Verkehrslageerfassungsrechner, wobei die Fahrzeugdaten Informationen über den Betriebszustand und/oder die Umgebung des Fahrzeugs enthalten und die Positionsdaten Informationen über die Position des Fahrzeugs in einem vorbestimmten Koordinatensystem zu einem bestimmten Zeitpunkt enthalten, mit einem Datenbus (1), der mit einer Einrichtung zur Übermittlung der Fahrzeugdaten verbunden ist, mit einem ersten mit dem Datenbus (1) verbundenen Speicher (2), der die in einem Intervall, das einer vorgegebenen Zeitspanne oder einer vorgegebenen Wegstrecke entspricht, an den Datenbus übermittelten Fahrzeugdaten speichert, einer Positionsbestimmungsvorrichtung (3), die eine momentane Position des Fahrzeugs als Positionsdaten in dem vorbestimmten Koordinatensystem bestimmt und an den Datenbus (1) übermittelt, mit einem zweiten mit dem Datenbus (1) verbundenen Speicher (4), der die in dem Intervall an den Datenbus (1) übermittelten Positionsdaten speichert, mit einer Vorrichtung (5, 6) zur Datenreduzierung und zur Auswahl der gespeicherten Fahrzeugdaten nach vorbestimmten Kriterien, die mit dem Datenbus (1) verbunden ist und die gespeicherten Positionsdaten, die einen ersten Vektorzug bestimmen, der den durch das Fahrzeug in dem Intervall zurückgelegten Weg beschreibt, derart reduziert, daß die reduzierten Positionsdaten einen zweiten Vektorzug bestimmen und der maximale senkrechte Abstand der Vektoren des zweiten Vektorzugs von dem ersten Vektorzug kleiner als ein vorbestimmter Schwellenwert ist, und mit einer Übertragungsvorrichtung (7), die mit dem Datenbus (1) verbunden ist, zum periodischen oder auf Anfrage durch den Zentralrechner erfolgenden Übertragen der reduzierten Positionsdaten und einer Auswahl der gespeicherten Fahrzeugdaten, nach vorbestimmten Kriterien.

**8.** Vorrichtung nach Anspruch 7,
**gekennzeichnet durch**
einen dritten Speicher (8), der eine digitalisierte Karte, die den Verlauf von Verkehrswegen in dem vorbestimmten Koordinatensystem und jeweils einen Code für jeweils einen der Verkehrswege enthält, speichert.

**9.** Vorrichtung nach Anspruch 7 oder 8,
**dadurch gekennzeichnet, daß**
die Einrichtung zur Übermittlung der Fahrzeugdaten die Fahrzeugdaten von Sensoren und/oder Aktoren (9) des Fahrzeugs als zyklisch ausgegebene aktuelle Werte von kontinuierlich veränderlichen Zustandsgrößen, und/oder binär ausgegebene Zustandswerte von diskreten Zustandsgrößen, und/oder Fahrzeugdaten mit einer vorbestimmten höheren Priorität erhält und an den Datenbus übermittelt, und daß der Datenbus die zyklisch ausgegebenen Werte an einen ersten Speicherbereich (2) des ersten Speichers (2), die binär ausgegebenen Zustandswerte an einen zweiten Speicherbereich (2b) des ersten Speichers (2), und die Fahrzeugdaten mit einer vorbestimmten Priorität an einen dritten Speicherbereich (2c) des ersten Speichers (2) ausgibt, die diese speichern.

**10.** Vorrichtung nach Anspruch 9,
**dadurch gekennzeichnet, daß**
die Vorrichtung (5, 6) zur Datenreduzierung aus den gespeicherten Fahrzeugdaten die Fahrzeugdaten aus dem ersten Speicherbereich (2a), die sich gegenüber dem vorhergehenden Intervall geändert haben, aus dem zweiten Speicherbereich (2b), die eine Schwellwertüber- und/oder -unterschreitung aufweisen und/oder in einem vorbestimmten Wertebereich liegen, und aus dem dritten Speicherbereich (2c) immer zur Übertragung auswählt.

**Claims**

**1.** Method for reducing and transmitting an amount of vehicle data and position data from a vehicle of a random sample vehicle fleet to a central traffic monitoring computer, the vehicle data containing information about the operating state and/or the environment of the vehicle and the position data containing information about the position of the vehicle in a predetermined system of co-ordinates at a specific time, having the steps:

- storing the vehicle data occurring in an interval, which corresponds to a preset time period or a preset path distance, in a first memory (2),
- storing the position data occurring in the interval in a second memory (4),
- reducing the stored position data, which determine a first vector line which describes the path covered by the vehicle during the interval, in such a way that the reduced position data determine a second vector line and the maximal vertical distance of the vectors of the second vector line from the first vector line is smaller than a predetermined threshold value,
- making a selection from the stored vehicle data according to predetermined criteria, with respect to the reduced position data,
- preparing the reduced position data and the selection of stored vehicle data and
- transmission of the prepared data periodically or on demand by the central computer.

**2.** Method according to claim 1,
wherein the reduction of the position data has the following steps:

a) determining the connecting straight lines of a first and a second position of the vehicle in the interval and the maximal vertical distance of the connecting straight line from the first vector line, wherein initially, in determining the connecting straight line, the starting point of the first vector line is set as the first position and the end point of the first vector line as the second position, and the starting point of the first vector line is stored as the position value of the reduced position data, and

b) if the distance is not smaller than the predetermined threshold value, carrying out step a) again with the end point of the distance on the first vector line as the new second position and the unaltered first position from the preceding explanations of step a), or if the distance is smaller than the predetermined threshold value, storing the second position as the position value of the reduced position data and carrying out step a) again with the second position just stored as the new first position and with the last second position, not yet stored as the position value of the reduced position data, from the preceding explanations of step a) as the new second position, the reduction being ended when the new first position is the end point of the first vector line.

**3.** Method according to claim 1,
wherein the reduction of the position data has the following steps:

c) comparing the stored position data with a digitised map stored in the vehicle which contains the course of traffic paths in the predetermined system of co-ordinates and in each case contains a code for respectively one of the traffic paths, and

d) storing the starting point and end point of each part of the first vector line which agrees with a section of one of the traffic paths with a predetermined tolerance, and storing the code of this traffic path.

**4.** Method according to claim 2 and 3,
wherein the reduction of the position data for the part or parts of the first vector line, which agree with one of the traffic paths within the predetermined tolerance, is carried out according to steps c) and d), and for the part or parts of the first vector line, which agree within the predetermined tolerance with none, or with more than one, of the traffic paths, is carried out according to steps a) and b) with the corresponding starting and end points of parts of the first vector line.

**5.** Method according to one of claims 1 to 4,
**characterised in that**
for the second vector line only the starting and/or end points are stored in the predetermined system of co-ordinates and the remaining reduced position data as relative co-ordinates to this starting and/or end point.

**6.** Method according to one of claims 1 to 5,
**characterised in that**
the transmitted vehicle data are selected from the stored vehicle data in such a way that vehicle data which contain information about a discrete status are only selected on an alteration of the discrete status, **in that** vehicle data which contain information about a continuously altering state are selected in a predetermined manner only when a threshold value is exceeded or not reached and/or as lying in a predetermined range, and **in that** vehicle data which contain information of a predetermined higher priority are always selected and can alternatively be transmitted immediately on generation of the information with the instantaneous position value.

**7.** Device for reducing and transmitting an amount of vehicle data and position data from a vehicle of a random sample vehicle fleet to a central vehicle monitoring computer, the vehicle data containing information about the operating state and/or the environment of the vehicle, and the position data containing information about the position of the vehicle in a predetermined system of co-ordinates at a specific time, having a data bus (1), which is connected to a device for transmitting the vehicle data, having a first memory connected to the data bus (1) and which stores vehicle data transmitted to the data bus in an interval which corresponds to a preset time period or a preset path distance, having a position determining device which determines an instantaneous position of the vehicle as position data in the predetermined system of co-ordinates and transmits same to the data bus (1), having a second memory (4) connected to the data bus (1) and which stores position data transmitted to the data bus (1) in the interval, having a device (5, 6) for data reduction and for the selection of the stored vehicle data according to predetermined criteria, this device being connected to the data bus (1) and reducing the stored position data, which determine a first vector line, which describes the path covered by the vehicle in the interval, in such a way that the reduced position data determine a second vector line and the maximal vertical distance of the vectors of the second vector line from the first vector line is smaller than a predetermined threshold value, and with a transmitting device (7), which is connected to the data bus (1) for transferring the reduced position data periodically or on demand by the computer and a selection of the stored vehicle data according to predetermined criteria.

8. Device according to claim 7,
   **characterised by**
   a third memory which stores a digitised map containing the course of traffic paths in the predetermined system co-ordinates and in each case a code for respectively one of the traffic paths.

9. Device according to claim 7 or 8,
   **characterised in that**
   the device for transmitting vehicle data receives and transmits to the data bus the vehicle data from sensors and/or actuators (9) of the vehicle as cyclically output current values of continuously altering state variables, and/or state values of discrete state variables output in binary, and/or vehicle data having a predetermined higher priority, and **in that** the data bus outputs the cyclically output values to a first storage area (2) of the first memory (2), the state values output in binary to a second storage area (2b) of the first memory (2) and the vehicle data having a predetermined priority to a third storage area (2c) of the first memory (2), which store same.

10. Device according to claim 9,
    **characterised in that**
    the device (5, 6) for reducing data always selects for transmission from the stored vehicle data the vehicle data from the first storage area (2a), which have altered in relation to the preceding interval, from the second storage area (2b) the vehicle data which have exceeded or fallen short of a threshold value and/or lie in a predetermined range of values, and the vehicle data from the third storage area (2c).

**Revendications**

1. Procédé pour réduire et transmettre une quantité de données de véhicule et de données de position à partir d'un véhicule d'une flotte de véhicules échantillons à un calculateur central de détection de situation de trafic, les données de véhicule contenant des informations sur l'état de fonctionnement et/ou l'environnement du véhicule et les données de position contenant des informations sur la position du véhicule dans un système de coordonnées prédéterminé à un instant donné, comportant les étapes :

   - mémorisation des données de véhicule apparaissant dans un intervalle qui correspond à un intervalle de temps prédéfini ou à une étendue prédéfinie dans une première mémoire (2),
   - mémorisation des données de position apparaissant dans l'intervalle dans une seconde mémoire (4),
   - réduction des données de position mémorisées, qui déterminent un premier ensemble de vecteurs, qui décrit le trajet parcouru par le véhicule dans l'intervalle, de sorte que les données de position réduites déterminent un second ensemble de vecteurs, et l'écartement maximal normal des vecteurs du second ensemble de vecteurs du premier ensemble de vecteurs est plus petit qu'une valeur de seuil prédéterminée,
   - réalisation d'une sélection à partir des données de véhicule mémorisées selon des critères prédéfinis, par rapport aux données de position réduites,
   - mise à disposition des données de position réduites et de la sélection des données de véhicule mémorisées, et
   - transmission des données mises à disposition de façon périodique ou par appel par le calculateur central.

2. Procédé selon la revendication 1, dans lequel la réduction des données de position présente les étapes suivantes :

   a) déterminer les droites de liaison d'une première position et d'une seconde position du véhicule dans l'intervalle et de l'écartement maximal normal des droites de liaison par rapport au premier ensemble de vecteurs, au début de la détermination des droites de liaison, le point initial du premier ensemble de vecteurs étant pris comme première position et le point final du premier ensemble de vecteurs comme seconde position et le point initial du premier ensemble de vecteurs étant mémorisé comme valeur de position des données de position réduites, et
   b) quand l'écartement n'est pas plus petit que la valeur de seuil prédéterminée, effectuer à nouveau l'étape a) avec le point final de l'écartement sur le premier ensemble de vecteurs comme nouvelle seconde position et la première position non modifiée à partir des réalisations précédentes de l'étape a) ou, quand l'écartement est plus petit que la valeur de seuil prédéterminée, mémoriser la seconde position comme valeur de position des données de position réduites et effectuer à nouveau l'étape a) avec la seconde position précisément mémorisée comme nouvelle première position et avec la dernière seconde position non encore mémorisée comme valeur de position des données de position réduites à partir des réalisations précédentes de l'étape a) comme nouvelle seconde position, la réduction étant achevée lorsque la nouvelle première position est le point final du premier ensemble de vecteurs.

**3.** Procédé selon la revendication 1, dans lequel la réduction des données de position présente les étapes suivantes :

c) comparer les données de position mémorisées avec une carte numérisée mémorisée dans le véhicule, qui comporte l'allure de trajets de trafic dans le système de coordonnées prédéterminé et, à chaque fois, un code pour un des trajets, et
d) mémoriser le point initial et le point final de chaque partie du premier ensemble de vecteurs, qui correspond à un tronçon d'un des trajets avec une tolérance prédéterminée, et le code de ce trajet.

**4.** Procédé selon les revendications 2 et 3, dans lequel la réduction des données de position pour la ou les parties du premier ensemble de vecteurs, qui correspondent, à l'intérieur de la tolérance prédéterminée, à un des trajets, de façon correspondant aux étapes c) et d), et pour la ou les parties du premier ensemble de vecteurs, qui correspondent, à l'intérieur de la tolérance prédéterminée, à aucun trajet ou à plus d'un des trajets, de façon correspondant aux étapes a) et b), est effectuée avec les points initiaux et finaux correspondants des parties du premier ensemble de vecteurs.

**5.** Procédé selon une des revendications 1 à 4,
**caractérisé en ce que**, pour le second ensemble de vecteurs, uniquement le point initial et/ou le point final sont mémorisés comme points dans le système de coordonnées prédéterminé et les données de position réduites restantes sont mémorisées comme coordonnées relatives par rapport à ce point initial et/ou ce point final.

**6.** Procédé selon une des revendications 1 à 5,
**caractérisé en ce que** les données de véhicule transmises sont sélectionnées à partir des données de véhicule mémorisées, de sorte que des données de véhicule, qui contiennent des informations sur un statut discret, sont sélectionnées uniquement lors d'un changement du statut discret, **en ce que** des données de véhicule, qui contiennent des informations sur un état se modifiant de façon continue, sont sélectionnées, de façon prédéterminée, uniquement lorsque la valeur de seuil est dépassée et/ou n'est pas atteinte, et/ou sont sélectionnées uniquement quand elles se trouvent dans une zone prédéterminée, et **en ce que** des données de véhicule, qui contiennent des informations d'une priorité prédéterminée plus élevée, sont toujours sélectionnées et, au choix, peuvent être transmises immédiatement lorsque l'information est créée avec la valeur de position instantanée.

**7.** Dispositif pour réduire et transmettre une quantité de données de véhicule et de données de position à partir d'un véhicule d'une flotte de véhicules échantillons à un calculateur central de détection de situation de trafic, les données de véhicule contenant des informations sur l'état de fonctionnement et/ou l'environnement du véhicule, et les données de position contenant des informations sur la position du véhicule dans un système de coordonnées prédéterminé en un instant déterminé, comportant un bus de données (1), qui est relié à un dispositif pour transmettre les données de véhicule, une première mémoire (2) reliée au bus de données (1), qui mémorise les données de véhicule transmises au bus de données dans un intervalle qui correspond à un intervalle de temps prédéfini ou à une étendue prédéfinie, un dispositif de détermination de position (3), qui détermine une position instantanée du véhicule comme données de position dans le système de coordonnées prédéterminé et la transmet au bus de données (1), une seconde mémoire (4) reliée au bus de données (1), qui mémorise les données de position transmises dans l'intervalle au bus de données (1), un dispositif (5, 6) pour réduire les données et pour sélectionner les données de véhicule mémorisées selon des critères prédéterminés, qui est relié au bus de données (1) et réduit les données de position mémorisées, qui déterminent un premier ensemble de vecteurs, qui décrit le trajet parcouru dans l'intervalle par le véhicule, de sorte que les données de position réduites déterminent un second ensemble de vecteurs et l'écartement maximal normal des vecteurs du second ensemble de vecteurs du premier ensemble de vecteurs est plus petit qu'une valeur de seuil prédéterminée, et comportant un dispositif de transmission (7), qui est relié au bus de données (1), pour la transmission périodique ou par appel effectuée par le calculateur central des données de position réduites et d'une sélection des données de véhicule mémorisées selon des critères prédéterminés.

**8.** Dispositif selon la revendication 7,
**caractérisé par** une troisième mémoire (8), qui mémorise une carte numérisée qui contient l'allure de trajets de trafic dans le système de coordonnées prédéterminé et, à chaque fois, un code pour un des trajets.

9. Dispositif selon la revendication 7 ou 8,
**caractérisé en ce que** le dispositif pour transmettre les données de véhicule obtient les données de véhicule de capteurs et/ou d'acteurs (9) du véhicule comme valeurs actuelles, émises de façon cyclique, de grandeurs d'état se modifiant de façon continue et/ou valeurs d'état, émises de façon binaire, de grandeurs d'état discrètes et/ou données de véhicule ayant une priorité prédéterminée plus élevée et les transmet au bus de données, et **en ce que** le bus de données émet les valeurs émises de façon cyclique au niveau d'une première zone de mémoire (2a) de la première mémoire (2), les valeurs d'état émises de façon binaire au niveau d'une seconde zone de mémoire (2b) de la première mémoire (2), et les données de véhicule ayant une priorité prédéterminée au niveau d'une troisième zone de mémoire (2c) de la première mémoire (2), qui mémorisent celles-ci.

10. Dispositif selon la revendication 9,
**caractérisé en ce que** le dispositif (5, 6) sélectionne toujours, pour le transfert, pour réduire les données à partir des données de véhicule mémorisées, les données de véhicule à partir de la première zone de mémoire (2a), qui se sont modifiées par rapport à l'intervalle précédent, à partir de la seconde zone de mémoire (2b), qui présentent un dépassement et/ou une non atteinte de la valeur de seuil et/ou se trouvent dans une zone de valeurs prédéterminée, et à partir de la troisième zone de mémoire (2c).

Fig. 1

Fig. 2

Fig. 3

Fig. 4

Zentralrechner ⟋10

Sender/Empfänger ⟋11

Sender/Empfänger ⟋7

CPU ⟋5

Arbeitsspeicher ⟋6

GPS ⟋3

B u s

erster Speicherbereich ⟋2a

2

zweiter Speicherbereich ⟋2b

Sensoren/Aktoren ⟋9

dritter Speicher ⟋8

dritter Speicherbereich ⟋2c

1

zweiter Speicher ⟋4

Fig. 5